# EUROPÄISCHE PATENTANMELDUNG

(11) **EP 2 706 769 A1**
(43) Veröffentlichungstag der Anmeldung: **12.03.2014**
(21) Anmeldenummer: 12178889.7
(22) Anmeldetag: 01.08.2012
(51) Int. Cl.: H04W 12/06, H04L 29/06

(54) **Verfahren und Vorrichtung zum sicheren Zugang zu einem Dienst**

(71) Anmelder: Secunet Security Networks Aktiengesellschaft, 45128 Essen (DE)
(72) Erfinder: Wappenschmidt, Amin, 21029 Hamburg (DE)
(74) Vertreter: Rohmann, Michael

(57) **Zusammenfassung**

Verfahren zum sicheren Zugang zu einem Dienst in einer festgelegten, vertrauenswürdigen Umgebung. In der festgelegten, vertrauenswürdigen Umgebung ist zumindest eine Netzwerkkomponente angeordnet, wobei in der Netzwerkkomponente ein Passwort gespeichert wird. Ein Anwendergerät wird in die vertrauenswürdige Umgebung gebracht, wobei das Anwendergerät die Netzwerkkomponente kontaktiert und das in der Netzwerkkomponente abgespeicherte Passwort abruft. Das Anwendergerät übermittelt das Passwort an den Dienst, wobei der Dienst für das Anwendergerät frei geschaltet wird, wenn ein in dem Dienst hinterlegtes Passwort mit dem von dem Anwendergerät an den Dienst übermittelten Passwort übereinstimmt.

## Beschreibung

Die Erfindung betrifft ein Verfahren zum sicheren Zugang zu einem Dienst in einer festgelegten, vertrauenswürdigen Umgebung.

Verfahren der eingangs genannten Art sind aus der Praxis grundsätzlich bekannt. Häufig müssen aufgrund von Sicherheitsanforderungen vor dem Zugriff auf bestimmte Dienste sowie vor dem Zugriff auf verschlüsselte Daten die Dienste freigegeben bzw. die verschlüsselten Daten entschlüsselt werden. Ein Schutz der Dienste bzw. Daten ist insbesondere dann notwendig, wenn diese Geräte außerhalb einer definierten, vertrauenswürdigen Umgebung betrieben werden. In einer vertrauenswürdigen Umgebung könnte auf das Sperren bzw. Verschlüsseln von Daten regelmäßig verzichtet werden, da in diesen Umgebungen der Zugriff auf die Dienste bzw. Daten ausschließlich durch vertrauenswürdige Instanzen oder Nutzer erfolgt. Nachteilig bei den aus der Praxis bekannten Verfahren ist in diesem Fall, dass die Dienste bzw. Daten auch dann nicht geschützt wären, wenn außerhalb der vertrauenswürdigen Umgebung auf den Dienst zugegriffen wird oder Daten außerhalb der vertrauenswürdigen Umgebung genutzt werden. Zur Vermeidung dieses Missstandes wird bei den aus der Praxis bekannten Verfahren daher ein Passwortschutz eingesetzt, mit dem die Dienste bzw. Daten gegen unautorisierte Benutzung geschützt werden. Das Passwort muss allerdings auch nach einer gewissen Inaktivität bei der Benutzung des Dienstes oder Zugriffs auf die Daten erneut eingegeben werden, weswegen die Nutzung des Dienstes oder der Daten für einen Anwender (User) teilweise mit einem geringen Bedienkomfort verbunden ist.

Der Erfindung liegt daher das technische Problem zugrunde, ein Verfahren der eingangs genanten Art anzugeben, das sich durch eine einfache Bedienbarkeit und trotzdem durch ein hohes Sicherheitsniveau auszeichnet. Ebenso liegt der Erfindung das technische Problem zugrunde, eine entsprechende Vorrichtung anzugeben.

Zur Lösung des technischen Problems lehrt die Erfindung ein Verfahren zum sicheren Zugang zu einem Dienst in einer festgelegten, vertrauenswürdigen Umgebung, wobei in der festgelegten, vertrauenswürdigen Umgebung zumindest eine Netzwerkkomponente angeordnet wird, wobei in der Netzwerkkomponente ein Passwort gespeichert wird, wobei ein Anwendergerät in die vertrauenswürdige Umgebung eingebracht wird, wobei das Anwendergerät die Netzwerkkomponente kontaktiert und das in der Netzwerkkomponente abgespeicherte Passwort abruft, wobei das Anwendergerät das Passwort an den Dienst übermittelt und wobei der Dienst für das Anwendergerät frei geschaltet wird, wenn ein in dem Dienst hinterlegtes Passwort mit dem von dem Anwendergerät an den Dienst übermittelten Passwort übereinstimmt. Sicherer Zugang meint im Rahmen der Erfindung, dass der Zugang zu dem Dienst vor dem Zugriff durch eine unautorisierte Instanz geschützt ist. Der Dienst ist beispielsweise ein Dienst im Internet, bevorzugt ein Web-Mail-Dienst. Es ist möglich, dass der Dienst als Zugang zu einem Benutzerkonto vorzugsweise auf einem lokalen Gerät, beispielsweise einem Rechner (PC), in der vertrauenswürdigen Umgebung ausgebildet ist. Gemäß einer Ausführungsform ist der Dienst ein Massenspeicher, beispielsweise ein Dateiserver und/oder ein Network Attached Storage-Server (NAS-Server) mit einem bevorzugt verschlüsselten Dateisystem. Wenn der sichere Zugang für das Anwendergerät zu dem Massenspeicher frei geschaltet wird, wird vorzugsweise das verschlüsselte Dateisystem entschlüsselt. Zweckmäßigerweise wird das Dateisystem des Massenspeichers verschlüsselt, wenn der Massenspeicher außerhalb der vertrauenswürdigen Umgebung eingesetzt wird. Die vertrauenswürdige Umgebung ist empfohlenermaßen ein von dem öffentlichen Internet, vorzugsweise durch einen Router getrenntes Netzwerk. Es ist möglich, dass das Netzwerk von einer Recheneinheit (Computer) gebildet ist.

Es empfiehlt sich, dass die vertrauenswürdige Umgebung anhand eines Referenzdatensatzes festgelegt wird, wobei der Referenzdatensatz zumindest einen Datensatz aus der Gruppe "Positionsdaten (GPS-Daten), LAN-Daten, Bluetooth-Daten, Netzwerkadressen, GSM-Funkdaten, meteorologische Daten" enthält. Positionsdaten meint im Rahmen der Erfindung die Koordinaten bzw. räumliche Ausdehnung der vertrauenswürdigen Umgebung. LAN-Daten (Local Area Network-Daten) umfasst im Rahmen der Erfindung zumindest eine und vorzugsweise mehrere oder alle in einem Netzwerk vorzugsweise in der vertrauenswürdigen Umgebung angeordnete/angeordneten Komponente/Komponenten. Grundsätzlich ist es möglich, dass das LAN ein Funknetz (wireless LAN, WLAN) enthält und/oder als Funknetz bzw. WLAN ausgebildet ist. Gemäß einer Ausführungsform umfassen die LAN-Daten empfangbare, fremde WLAN-Signale und/oder Signalstärken und/oder Netzwerkkennungen der in das WLAN eingebundenen Komponenten. Empfangbare, fremde WLAN-Signale umfasst Signale von Netzwerken, die innerhalb der vertrauenswürdigen Umgebung empfangbar sind und die jeweils keine Komponente darstellen, die Teil der vertrauenswürdigen Umgebung sind. Signalstärke bezieht sich im Rahmen der Erfindung auf von fremden WLANs empfangbare und/oder von Komponenten aus der vertrauenswürdigen Umgebung empfangbare Signale. Netzwerkadressen umfasst im Rahmen der Erfindung die Adressen von Komponenten, die in der vertrauenswürdigen Umgebung angeordnet sind. GSM-Daten meint im Rahmen der Erfindung beispielsweise die Identität von einem in der vertrauenswürdigen Umgebung befindlichen, GSM-fähigen Gerät erreichbare bzw. erreichbaren GSM-Funkzellen. Meteorologische Daten sind beispielsweise die aktuelle Temperatur und/oder ein vergangener Temperaturverlauf. Bluetooth-Daten beinhalten Kontaktdaten zumindest eines in der vertrauenswürdigen Umgebung angeordneten, Bluetooth-fähigen Gerätes.

Vorzugsweise wird zur Anordnung der Netzwerkkomponente in der vertrauenswürdigen Umgebung der die vertrauenswürdigen Umgebung festlegende Referenzdatensatz mit von der Netzwerkkomponente bereitgestellten Einbindungsdatensatz verglichen, wobei die Netzwerkkomponente ausschließlich in die vertrauenswürdige Umgebung eingebunden wird, wenn eine vorgegebene, maximale Abweichung zwischen dem Referenzdatensatz und dem Einbindungsdatensatz unterschritten wird. Der Einbindungsdatensatz umfasst zumindest einen Datensatz, welcher Datensatz aus der Gruppe "Positionsdaten (GPS-Daten), LAN-Daten, Bluetooth-Daten, Netzwerkadressen, GSM-Funkdaten, meteorologische Daten" ausgewählt ist. Besonders bevorzugt ist der in dem Einbindungsdatensatz enthaltene Datensatz auch Bestandteil des Referenzdatensatzes. Vorzugsweise ist die maximale Abweichung vorgegeben bzw. vorgebbar, wodurch das Sicherheitsniveau des erfindungsgemäßen Verfahrens einstellbar ist. Je höher die zulässige Abweichung ist, desto geringer ist das Sicherheitsniveau. Mit abnehmender, zulässiger Abweichung zwischen dem Referenzdatensatz und dem Einbindungsdatensatz steigt das Sicherheitsniveau des erfindungsgemäßen Verfahrens. Besonders bevorzugt ist die Netzwerkkomponente in der vertrauenswürdigen Umgebung angeordnet bzw. in die vertrauenswürdige Umgebung eingebunden, wenn der von der Netzwerkkomponente bereitgestellte Einbindungsdatensatz identisch mit dem Referenzdatensatz ist. Stimmt gemäß einer Ausführungsform der Einbindungsdatensatz nicht mit dem Referenzdatensatz überein oder wird eine vorgegebene Abweichung zwischen dem Einbindungsdatensatz und dem Referenzdatensatz überschritten, wird die Netzwerkkomponente als fremde Netzwerkkomponente bzw. als nicht zu der vertrauenswürdigen Umgebung gehörende Netzwerkkomponente betrachtet. In diesem Fall ist die Netzwerkkomponente kein Bestandteil der vertrauenswürdigen Umgebung. Zweckmäßigerweise verfügt die Netzwerkkomponente über zumindest einen Sensor, mit welchem Sensor der Einbindungsdatensatz, vorzugsweise die in dem Einbindungsdatensatz enthaltenen Datensätze bzw. der in dem Einbindungsdatensatz enthaltene Datensatz, detektierbar bzw. ermittelbar ist. Der Sensor ist gemäß einer Ausführungsform ein GPS-Sensor.

Es empfiehlt sich, dass zur Einbringung des Anwendergerätes in die vertrauenswürdige Umgebung der die vertrauenswürdige Umgebung festlegende Referenzdatensatz mit von dem Anwendergerät ermittelten Eintrittsdaten verglichen wird und wobei das Anwendergerät ausschließlich dann als der vertrauenswürdigen Umgebung zugehörig gilt, wenn eine vorgegebene, maximale Abweichung zwischen dem Referenzdatensatz und den Eintrittsdaten unterschritten wird. Besonders bevorzugt stimmen die Eintrittsdaten mit dem Referenzdatensatz überein. Die von dem Anwendergerät ermittelten Eintrittsdaten umfassen zumindest einen Datensatz, welcher Datensatz in dem Referenzdatensatz enthalten ist. Beispielsweise umfassen die Eintrittsdaten zumindest einen Datensatz ausgewählt aus der Gruppe "Positionsdaten (GPS-Daten), LAN-Daten, Bluetooth-Daten, Netzwerkadressen, GSM-Funkdaten, meteorologische Daten". Es empfiehlt sich, dass das Anwendergerät zumindest eine Sensoreinheit aufweist, mit welcher Sensoreinheit die Eintrittsdaten erfassbar bzw. bestimmbar sind. Zweckmäßigerweise ist die Sensoreinheit des Anwendergerätes ein GPS-Sensor. Es hat sich bewährt, dass in der Netzwerkkomponente und/oder in dem Anwendergerät jeweils der Referenzdatensatz hinterlegt ist, durch den die vertrauenswürdige Umgebung definiert ist. Besonders bevorzugt ermittelt die Netzwerkkomponente vorzugsweise anhand des Einbindungsdatensatzes und der in der Netzwerkkomponente gespeicherten Referenzdaten proaktiv die Zugehörigkeit der Netzwerkkomponente zu der vertrauenswürdigen Umgebung.

Besonders bevorzugt verweigert die Netzwerkkomponente einen Abruf des in der Netzwerkkomponente hinterlegten Passwortes durch das Anwendergerät, wenn sich das Anwendergerät außerhalb der vertrauenswürdigen Umgebung befindet. Zweckmäßigerweise beantwortet die Netzwerkkomponente eine Passwortanfrage des Anwendergerätes ausschließlich dann, wenn das Anwendergerät in die vertrauenswürdige Umgebung gebracht bzw. eingebunden ist. Zweckmäßigerweise ist in dem Anwendergerät kein Passwort gespeichert. Befindet sich das Anwendergerät beispielsweise außerhalb der vertrauenswürdigen Umgebung, ist eine Passworteingabe durch den User erforderlich, um mit dem Anwendergerät einen sicheren Zugang zu der vertrauenswürdigen Umgebung und/oder zu dem Dienst zu erhalten. Es liegt im Rahmen der Erfindung, dass die Netzwerkkomponente einen Abruf des in der Netzwerkkomponente hinterlegten Passwortes durch das Anwendergerät verweigert, wenn sich die Netzwerkkomponente außerhalb der vertrauenswürdigen Umgebung befindet. Sobald der von der Netzwerkkomponente ermittelte Einbindungsdatensatz eine vorgegebene Abweichung von dem Referenzdatensatz überschreitet, verweigert die Netzwerkkomponente eine Weitergabe des in der Netzwerkkomponente hinterlegten Passwortes.

Es hat sich als vorteilhaft herausgestellt, dass in der vertrauenswürdigen Umgebung zumindest zwei und vorzugsweise eine Mehrzahl bzw. eine Vielzahl von Netzwerkkomponenten angeordnet wird/werden, wobei in zumindest zwei Netzwerkkomponenten der vertrauenswürdigen Umgebungen jeweils ein Teil des Passwortes abgelegt wird. Bevorzugt ist in jeder Netzwerkkomponente der vertrauenswürdigen Umgebung ein Teil des Passwortes gespeichert. Zweckmäßigerweise sind die in den einzelnen Netzwerkkomponenten hinterlegten Passwortteile verschieden voneinander. Es ist möglich, dass zumindest zwei Teile des Passwortes gleich und gegebenenfalls alle Passwortteile gleich bzw. identisch sind. Es ist möglich, dass die Adresse einer Netzwerkkomponente als Passwort genutzt wird. Mit dem Passwort ist ein Zugang zu dem Dienst möglich. Gemäß einer Ausführungsform erfolgt mittels des Passwortes eine Entschlüsselung eines verschlüsselten Dateisystems, wobei vorzugsweise das Passwort als Entschlüsselungsschlüssel genutzt wird.

Zweckmäßigerweise ruft das Anwendergerät aus den Netzwerkkomponenten, in denen jeweils ein Teil des Passwortes abgelegt ist, die jeweiligen Teile des Passwortes ab. Empfohlenermaßen werden die von dem Anwendergerät abgerufenen Teile des Passwortes in dem Anwendergerät zu dem Passwort kombiniert. Gemäß einer besonders bevorzugten Ausführungsform erfolgt keine bzw. lediglich eine temporäre Speicherung des Passwortes in dem Anwendergerät. Vorzugsweise werden in dem Anwendergerät zweckmäßigerweise Adressen der zu kontaktierenden Netzwerkkomponente bzw. Netzwerkkomponenten hinterlegt, von welcher Netzwerkkomponente das Passwort bzw. von welchen Netzwerkkomponenten die Teile des Passwortes abzurufen ist bzw. sind. Das Abrufen des Passwortes bzw. der Teile des Passwortes erfolgt im Rahmen der Erfindung vorzugsweise proaktiv durch das Anwendergerät, sobald das Anwendergerät zweckmäßigerweise in die vertrauenswürdige Umgebung eingebracht ist und/oder den Dienst aufruft. Ist das Anwendergerät nicht in die vertrauenswürdige Umgebung eingebracht und/oder ist eine Netzwerkkomponente, in der ein Teil des Passwortes abgelegt ist, nicht in der vertrauenswürdigen Umgebung angeordnet, kann im Rahmen der Erfindung kein Zugang zu dem Dienst proaktiv durch das Anwendergerät hergestellt werden. Proaktiv meint im Rahmen der Erfindung, dass das Anwendergerät selbsttätig im Rahmen einer Passwortabfrage die Netzwerkkomponente in der vertrauenswürdigen Umgebung und/oder die Netzwerkkomponenten in der vertrauenswürdigen Umgebung kontaktiert, um das in der Netzwerkkomponente hinterlegte Passwort bzw. die in den einzelnen Netzwerkkomponenten hinterlegten Teile des Passwortes abfragt. Es ist möglich, dass das Anwendergerät lediglich proaktiv eine Passwortabfrage ausführt, wenn das Anwendergerät in der vertrauenswürdigen Umgebung angeordnet ist. Es empfiehlt sich, dass die Netzwerkkomponente bzw. die Netzwerkkomponenten jeweils proaktiv bzw. selbstbestimmt ihre Zugehörigkeit zu der vertrauenswürdigen Umgebung ermitteln.

Weiterhin lehrt die Erfindung zur Lösung des technischen Problems eine Vorrichtung, mit der ein Dienst in einer festgelegten, vertrauenswürdigen Umgebung sicher zugänglich ist, wobei die festgelegte, vertrauenswürdige Umgebung zumindest eine Netzwerkkomponente aufweist, wobei in der Netzwerkkomponente ein Passwort gespeichert ist, wobei ein Anwendergerät in die vertrauenswürdige Umgebung bringbar bzw. integrierbar ist, wobei eine Kommunikation zwischen dem in die vertrauenswürdige Umgebung integrierten Anwendergerät und der Netzwerkkomponente erfolgt, wobei das in der Netzwerkkomponente abgespeicherte Passwort durch das in die vertrauenswürdige Umgebung integrierte Anwendergerät abrufbar ist, wobei das Anwendergerät das Passwort an den Dienst übermittelt und wobei der Dienst für das Anwendergerät frei geschaltet wird, wenn ein in dem Dienst hinterlegtes Passwort mit dem von dem Anwendergerät übermittelten Passwort übereinstimmt.

Empfohlenermaßen ist die vertrauenswürdige Umgebung ein vorzugsweise privates Netzwerk. Privates Netzwerk meint im Rahmen der Erfindung ein Firmennetzwerk und/oder ein Netz in einem privaten Wohnraum und/oder ein Rechenzentrum. Es empfiehlt sich, dass die Netzwerkkomponente eine passive Netzwerkkomponente ist. Die Netzwerkkomponente ist beispielsweise ein DSL-Switch, ein Filter, ein Verstärker oder dergleichen. Passive Netzwerkkomponente meint im Rahmen der Erfindung insbesondere, dass diese Netzwerkkomponente keine Daten oder Signale hervorbringt.

Es ist möglich, dass die Netzwerkkomponente eine aktive Netzwerkkomponente ist. Die aktive Netzwerkkomponente ist zumindest eine aus der Gruppe "Server, NAS-Server, Bluetooth-Gerät, Drucker, Massenspeicher" ausgewählte Komponente. Vorteilhafterweise ist das Anwendergerät ein netzwerkfähiges Gerät. Gemäß einer Ausführungsform ist das Anwendergerät ausgewählt aus der Gruppe "portabler Computer (Notebook), mobiles Telefon, Smartphone, Tablet PC".

Es hat sich als vorteilhaft herausgestellt, dass das Passwort eine Netzwerkadresse und/oder einen Teil einer Netzwerkadresse einer in der vertrauenswürdigen Umgebung angeordneten Netzwerkkomponente beinhaltet. Auf diese Weise wird sichergestellt, dass kein zusätzlicher Speicher in der Netzwerkkomponente bzw. in den Netzwerkkomponenten erforderlich ist, in der bzw. in denen das Passwort vorrätig zu halten ist. Es ist möglich, dass sich das Passwort aus den Netzwerkadressen bzw. aus Teilen der Netzwerkadressen der einzelnen in die vertrauenswürdige Umgebung integrierten Netzwerkkomponenten zusammensetzt.

Der Erfindung liegt die Erkenntnis zugrunde, dass sich das erfindungsgemäße Verfahren und die erfindungsgemäße Vorrichtung durch eine überraschend einfache Bedienbarkeit und hohe Anwenderfreundlichkeit auszeichnet. Die häufige Eingabe eines den Zugang zu einem Dienst ermöglichenden Passwortes wird mit dem erfindungsgemäßen Verfahren auf Situationen beschränkt, in denen das Anwendergerät nicht in einer vertrauenswürdigen Umgebung ist. Mit dem erfindungsgemäßen Verfahren ist es möglich, ohne Sicherheitseinbußen in Kauf zu nehmen auf die Eingabe eines Passwortes zu verzichten, wenn sich das Anwendergerät in der vertrauenswürdigen Umgebung befindet. Dadurch, dass die einzelnen Bestandteile eines den Zugang zu dem Dienst ermöglichenden Passwortes in der vertrauenswürdigen Umgebung hinterlegt sind, kann das Anwendergerät ohne einen speziell abgesicherten Speicher ausgebildet sein. Da es einem nicht autorisierten Dritten unbekannt ist, wo und wie das Passwort in dem erfindungsgemäßen Verfahren bzw. in der erfindungsgemäßen Vorrichtung erhalten wird, ist ein unautorisierter Zugang zu dem Dienst unmöglich bzw. nur mit aufwendigen Mitteln möglich. Folglich zeichnet sich das erfindungsgemäße Verfahren durch ein hohes Sicherheitsniveau und eine überraschend einfache Bedienbarkeit aus.

Nachfolgend wird die Erfindung anhand einer lediglich ein Ausführungsbeispiel darstellenden Zeichnung detailliert erläutert. Es zeigen in schematischer Darstellung
- **Fig. 1**: eine erfindungsgemäße Vorrichtung zur Ausführung des erfindungsgemäßen Verfahrens, bei der ein Anwendergerät in einer vertrauenswürdigen Umgebung angeordnet ist und
- **Fig. 2**: eine erfindungsgemäße Vorrichtung zur Ausführung des erfindungsgemäßen Verfahrens, bei der das Anwendergerät außerhalb der vertrauenswürdigen Umgebung angeordnet ist.

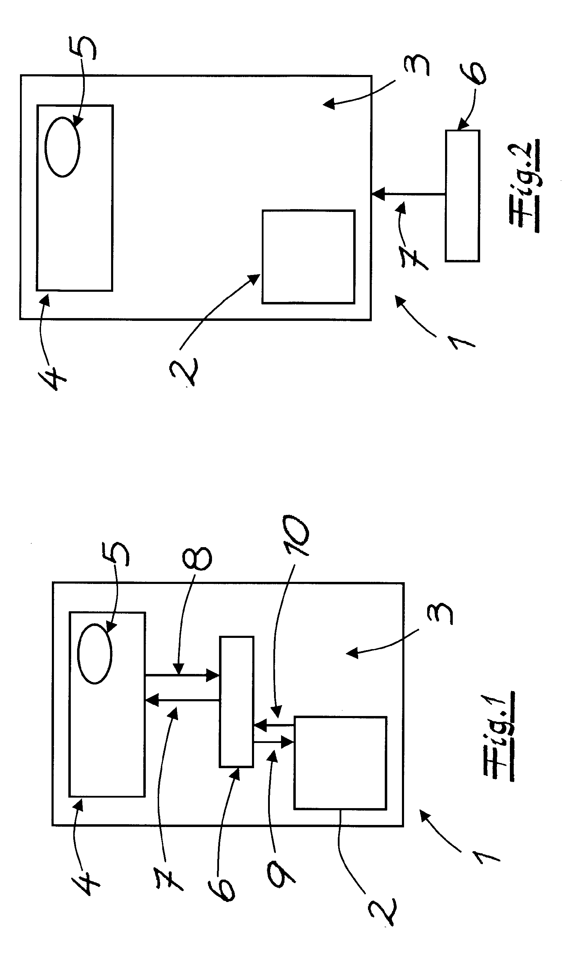

In Fig. 1 ist eine Vorrichtung 1 dargestellt, mit der ein als NAS-Server (Network Attached Storage-Server) 2 ausgebildeter Dienst in einer festgelegten, vertrauenswürdigen Umgebung 3 angeordnet ist. In der vertrauenswürdigen Umgebung 3 ist gemäß Fig. 1 eine Netzwerkkomponente 4 angeordnet. Die Netzwerkkomponente 4 verfügt über einen Sensor 5, mit welchem Sensor 5 Einbindungsdaten ermittelbar sind, welche Einbindungsdaten mit einem in der Netzwerkkomponente 4 hinterlegten Referenzdatensatz verglichen wird. Gemäß dem Ausführungsbeispiel bestimmt der Sensor 5 eine Position der Netzwerkkomponente 4 und vergleicht erhaltene Positionsdaten mit in dem Referenzdatensatz enthaltenen Positionsdaten. Gemäß dem Ausführungsbeispiel und den Fig. 1 und 2 stimmen die von dem Sensor 5 erhaltenen Positionsdaten und die in dem Referenzdatensatz hinterlegten Positionsdaten miteinander überein, so dass die Netzwerkkomponente 4 ihre Zugehörigkeit zu der vertrauenswürdigen Umgebung 3 feststellt und in die vertrauenswürdige Umgebung 3 eingebunden wird.

Weiterhin ist in Fig. 1 dargestellt, dass ein Anwendergerät 6 in die vertrauenswürdige Umgebung 3 eingebracht ist, wobei das Anwendergerät 6 vorzugsweise und gemäß Fig. 1 anhand von mit dem Anwendergerät 6 ermittelten Eintrittsdaten durch Abgleich mit dem in dem Anwendergerät 6 abgelegten Referenzdatensatz seine Zugehörigkeit zu der vertrauenswürdigen Umgebung 3 feststellt. Gemäß dem Ausführungsbeispiel in Fig. 1 stellt das Anwendergerät 6 fest, dass es Bestandteil der vertrauenswürdigen Umgebung 3 ist. Das in die vertrauenswürdige Umgebung 3 eingebundene Anwendergerät kann nun eine Passwortanfrage an die Netzwerkkomponente 4 richten.

Durch den Pfeil 7 ist dargestellt, dass das Anwendergerät 6 die Passwortanfrage an die Netzwerkkomponente 4 richtet, um ein in der Netzwerkkomponente 4 hinterlegtes Passwort abzurufen. Da sowohl die Netzwerkkomponente 4 als auch das Anwendergerät 6 jeweils in der vertrauenswürdigen Umgebung 3 angeordnet sind, sendet die Netzwerkkomponente 4 auf die Anfrage 7 hin ein in der Netzwerkkomponente 4 hinterlegtes Passwort an das Anwendergerät 6, was durch den Pfeil 8 dargestellt ist. Mit dem von der Netzwerkkomponente 4 erhaltenen Passwort meldet sich das Anwendergerät 6 an dem NAS-Server 2 an, was durch den Pfeil 9 symbolisiert ist.

Der NAS-Server 2 entschlüsselt gemäß dem Ausführungsbeispiel in dem nicht dargestellten Dateisystem des NAS-Servers 2 die vorrätig gehaltenen Dateien, wenn das, wie in Fig. 1 dargestellt, in dem NAS-Server 2 hinterlegte Passwort mit dem von dem Anwendergerät 6 an den NAS-Server 2 übermittelten Passwort übereinstimmt. Der Pfeil 10 stellt den Datentransfer zwischen dem NAS-Server 2 und dem Anwendergerät 6 dar.

In Fig. 2 ist dargestellt, dass das Anwendergerät 6 außerhalb der vertrauenswürdigen Umgebung 3 angeordnet ist. Das Anwendergerät 6 vergleicht die durch das Anwendergerät 6 festgestellten Eintrittsdaten mit den in dem Anwendergerät hinterlegten Referenzdatensatz und stellt dabei keine Übereinstimmung fest. Dadurch, dass das Anwendergerät 6 gemäß Fig. 2 außerhalb der vertrauenswürdigen Umgebung 3 angeordnet ist, kann es im Rahmen einer Passwortabfrage 7 die in der vertrauenswürdigen Umgebung 3 angeordnete Netzwerkkomponente 4 nicht erreichen. Infolgedessen ist es für das Anwendergerät 6 nicht möglich, durch eine Passwortabfrage 7 das zum Zugriff auf den NAS-Server 2 erforderliche Passwort zu erfragen. In Fig. 2 ist dargestellt, dass nach einer erfolglosen proaktiven Passwortabfrage durch das Anwendergerät 6 ein Zugriff auf den NAS-Server 2 nicht ausführbar ist. In Fig. 2 ist nicht dargestellt, dass durch eine manuelle Passworteingabe in das Anwendergerät 6 ein Zugang zu dem NAS-Server 2 hergestellt werden kann.

## Patentansprüche

1. Verfahren zum sicheren Zugang zu einem Dienst (2) in einer festgelegten, vertrauenswürdigen Umgebung (3), wobei in der festgelegten, vertrauenswürdigen Umgebung (3) zumindest eine Netzwerkkomponente (4) angeordnet wird, wobei in der Netzwerkkomponente (4) ein Passwort gespeichert wird, wobei ein Anwendergerät (6) in die vertrauenswürdige Umgebung (3) gebracht wird, wobei das Anwendergerät (6) die Netzwerkkomponente (4) kontaktiert und das in der Netzwerkkomponente (4) gespeicherte Passwort abruft, wobei das Anwendergerät (6) das Passwort an den Dienst (2) übermittelt und wobei der Dienst (2) für das Anwendergerät (6) frei geschaltet wird, wenn ein in dem Dienst (2) hinterlegtes Passwort mit dem von dem Anwendergerät (6) an den Dienst (2) übermittelten Passwort übereinstimmt.

2. Verfahren nach Anspruch 1, wobei die vertrauenswürdige Umgebung (3) anhand eines Referenzdatensatzes festgelegt wird, wobei der Referenzdatensatz zumindest einen Datensatz aus der Gruppe "Positionsdaten (GPS-Daten), LAN-Daten, Bluetooth-Daten, Netzwerkadressen, GSM-Daten, meteorologische Daten" enthält.

3. Verfahren nach Anspruch 2, wobei zur Anordnung der Netzwerkkomponente (4) in der vertrauenswürdigen Umgebung (3) der die vertrauenswürdige Umgebung (3) festlegende Referenzdatensatz mit von der Netzwerkkomponente (4) bereitgestellten Einbindungsdaten verglichen wird und wobei die Netzwerkkomponente (4) ausschließlich dann als der vertrauenswürdigen Umgebung (3) zugehörig gilt, wenn eine vorgegebene, maximale Abweichung zwischen dem Referenzdatensatz und dem Einbindungsdatensatz unterschritten wird.

4. Verfahren nach einem der Ansprüche 2 oder 3, wobei zur Einbringung des Anwendergerätes (6) in die vertrauenswürdige Umgebung (3) der die vertrauenswürdige Umgebung (3) festlegende Referenzdatensatz mit den von dem Anwendergerät (6) ermittelten Eintrittsdaten verglichen wird und wobei das Anwendergerät (6) ausschließlich dann als der vertrauenswürdigen Umgebung (3) zugehörig gilt, wenn eine vorgegebene, maximale Abweichung zwischen dem Referenzdatensatz und den Eintrittsdaten unterschritten wird.

5. Verfahren nach einem der Ansprüche 1 bis 4, wobei die Netzwerkkomponente (4) einen Abruf des in der Netzwerkkomponente (4) hinterlegten Passwortes durch das Anwendergerät (6) verweigert, wenn sich das Anwendergerät (6) außerhalb der vertrauenswürdigen Umgebung (3) befindet.

6. Verfahren nach einem der Ansprüche 1 bis 5, wobei die Netzwerkkomponente (4) einen Abruf des in der Netzwerkkomponente (4) hinterlegten Passwortes durch das Anwendergerät (6) verweigert, wenn sich die Netzwerkkomponente (6) außerhalb der vertrauenswürdigen Umgebung befindet.

7. Verfahren nach einem der Ansprüche 1 bis 6, wobei in der vertrauenswürdigen Umgebung (3) zumindest zwei und vorzugsweise eine Mehrzahl bzw. Vielzahl von Netzwerkkomponenten (4) angeordnet werden/wird, wobei in zumindest zwei Netzwerkkomponenten (4) der vertrauenswürdigen Umgebung (3) jeweils ein Teil des Passwortes abgelegt wird.

8. Verfahren nach Anspruch 7, wobei das Anwendergerät (6) aus den Netzwerkkomponenten (4), in denen jeweils ein Teil des Passwortes abgelegt ist, die jeweiligen Teile des Passwortes abruft.

9. Verfahren nach Anspruch 8, wobei die von dem Anwendergerät (6) abgerufenen Teile des Passwortes in dem Anwendergerät (6) zu dem Passwort kombiniert werden.

10. Vorrichtung, insbesondere zur Ausführung des Verfahrens nach einem der Ansprüche 1 bis 9, mit der ein Dienst (2) in einer festgelegten, vertrauenswürdigen Umgebung (3) sicher zugänglich ist, wobei die festgelegte, vertrauenswürdige Umgebung (3) zumindest eine Netzwerkkomponente (4) aufweist, wobei in der Netzwerkkomponente (4) ein Passwort gespeichert ist, wobei ein Anwendergerät (6) in die vertrauenswürdige Umgebung (3) bringbar bzw. integrierbar ist, wobei eine Kommunikation zwischen dem in die vertrauenswürdigen Umgebung (3) integrierten Anwendergerät (6) und der Netzwerkkomponente (4) erfolgt, wobei das in der Netzwerkkomponente (4) gespeicherte Passwort durch das in die vertrauenswürdige Umgebung (3) integrierte Anwendergerät (6) abrufbar ist, wobei das Anwendergerät (6) das Passwort an den Dienst (2) übermittelt und wobei der Dienst (2) für das Anwendergerät (6) frei geschaltet wird, wenn ein in dem Dienst (2) hinterlegtes Passwort mit dem von dem Anwendergerät (6) übermittelten Passwort übereinstimmt.

11. Vorrichtung nach Anspruch 10, wobei die vertrauenswürdige Umgebung (3) ein vorzugsweise privates Netzwerk ist.

12. Vorrichtung nach einem der Ansprüche 10 oder 11, wobei die Netzwerkkomponente (4) eine passive Netzwerkkomponente ist.

13. Vorrichtung nach einem der Ansprüche 10 oder 11, wobei die Netzkomponente (4) eine aktive Netzwerkkomponente ist.

14. Vorrichtung nach einem der Ansprüche 10 bis 13, wobei das Anwendergerät (6) ein netzwerkfähiges Gerät ist.

15. Vorrichtung nach einem der Ansprüche 10 bis 14, wobei das Passwort eine Adresse einer in der vertrauenswürdigen Umgebung (3) angeordneten Netzwerkkomponente (4) beinhaltet.

## Geänderte Patentansprüche

### Geänderte Patentansprüche gemäss Regel 137(2) EPÜ.

**1.** Verfahren zum sicheren Zugang zu einem Dienst (2) in einer festgelegten, vertrauenswürdigen Umgebung (3), wobei in der festgelegten, vertrauenswürdigen Umgebung (3) zumindest eine Netzwerkkomponente (4) angeordnet wird, wobei in der Netzwerkkomponente (4) ein Passwort gespeichert wird, wobei ein Anwendergerät (6) in die vertrauenswürdige Umgebung (3) gebracht wird, wobei das Anwendergerät (6) die Netzwerkkomponente (4) kontaktiert und das in der Netzwerkkomponente (4) gespeicherte Passwort abruft, wobei das Anwendergerät (6) das Passwort an den Dienst (2) übermittelt und wobei der Dienst (2) für das Anwendergerät (6) frei geschaltet wird, wenn ein in dem Dienst (2) hinterlegtes Passwort mit dem von dem Anwendergerät (6) an den Dienst (2) übermittelten Passwort übereinstimmt, **dadurch gekenn-zeichnet,**
dass in der vertrauenswürdigen Umgebung (3) zumindest zwei Netzwerkkomponenten (4) angeordnet werden, wobei in zumindest zwei Netzwerkkomponenten (4) der vertrauenswürdigen Umgebung (3) jeweils ein Teil des Passwortes abgelegt wird,
dass das Anwendergerät (6) aus den Netzwerkkomponenten (4), in denen jeweils ein Teil des Passworts abgelegt ist, die jeweiligen Teile des Passworts abruft und
dass die von dem Anwendergerät (6) abgerufenen Teile des Passwortes in dem Anwendergerät (6) zu dem Passwort kombiniert werden.

**2.** Verfahren nach Anspruch 1, wobei die vertrauenswürdige Umgebung (3) anhand eines Referenzdatensatzes festgelegt wird, wobei der Referenzdatensatz zumindest einen Datensatz aus der Gruppe "Positionsdaten (GPS-Daten), LAN-Daten, Bluetooth-Daten, Netzwerkadressen, GSM-Daten, meteorologische Daten" enthält.

**3.** Verfahren nach Anspruch 2, wobei zur Anordnung der Netzwerkkomponente (4) in der vertrauenswürdigen Umgebung (3) der die vertrauenswürdige Umgebung (3) festlegende Referenzdatensatz mit von der Netzwerkkomponente (4) bereitgestellten Einbindungsdaten verglichen wird und wobei die Netzwerkkomponente (4) ausschließlich dann als der vertrauenswürdigen Umgebung (3) zugehörig gilt, wenn eine vorgegebene, maximale Abweichung zwischen dem Referenzdatensatz und dem Einbindungsdatensatz unterschritten wird.

**4.** Verfahren nach einem der Ansprüche 2 oder 3, wobei zur Einbringung des Anwendergerätes (6) in die vertrauenswürdige Umgebung (3) der die vertrauenswürdige Umgebung (3) festlegende Referenzdatensatz mit den von dem Anwendergerät (6) ermittelten Eintrittsdaten verglichen wird und wobei das Anwendergerät (6) ausschließlich dann als der vertrauenswürdigen Umgebung (3) zugehörig gilt, wenn eine vorgegebene, maximale Abweichung zwischen dem Referenzdatensatz und den Eintrittsdaten unterschritten wird.

**5.** Verfahren nach einem der Ansprüche 1 bis 4, wobei die Netzwerkkomponente (4) einen Abruf des in der Netzwerkkomponente (4) hinterlegten Passwortes durch das Anwendergerät (6) verweigert, wenn sich das Anwendergerät (6) außerhalb der vertrauenswürdigen Umgebung (3) befindet.

**6.** Verfahren nach einem der Ansprüche 1 bis 5, wobei die Netzwerkkomponente (4) einen Abruf des in der Netzwerkkomponente (4) hinterlegten Passwortes durch das Anwendergerät (6) verweigert, wenn sich die Netzwerkkomponente (6) außerhalb der vertrauenswürdigen Umgebung befindet.

**7.** Vorrichtung, insbesondere zur Ausführung des Verfahrens nach einem der Ansprüche 1 bis 9, mit der ein Dienst (2) in einer festgelegten, vertrauenswürdigen Umgebung (3) sicher zugänglich ist, wobei die festgelegte, vertrauenswürdige Umgebung (3) zumindest eine Netzwerkkomponente (4) aufweist, wobei in der Netzwerkkomponente (4) ein Passwort gespeichert ist, wobei ein Anwendergerät (6) in die vertrauenswürdige Umgebung (3) bringbar bzw. integrierbar ist, wobei eine Kommunikation zwischen dem in die vertrauenswürdigen Umgebung (3) integrierten Anwendergerät (6) und der Netzwerkkomponente (4) erfolgt, wobei das in der Netzwerkkomponente (4) gespeicherte Passwort durch das in die vertrauenswürdige Umgebung (3) integrierte Anwendergerät (6) abrufbar ist, wobei das Anwendergerät (6) das Passwort an den Dienst (2) übermittelt und wobei der Dienst (2) für das Anwendergerät (6) frei geschaltet wird, wenn ein in dem Dienst (2) hinterlegtes Passwort mit dem von dem Anwendergerät (6) übermittelten Passwort übereinstimmt,
**dadurch gekennzeichnet,**
**dass** in der vertrauenswürdigen Umgebung (3) zumindest zwei Netzwerkkomponenten (4) angeordnet werden/wird, dass in zumindest zwei Netzwerkkomponenten (4) der vertrauenswürdigen Umgebung (3) jeweils ein Teil des Passwortes abgelegt wird,
**dass** das Anwendergerät (6) aus den Netzwerkkomponenten (4), in denen jeweils ein Teil des Passwortes abgelegt ist, die jeweiligen Teile des Passwortes abruft und
**dass** die von dem Anwendergerät (6) abgerufenen Teile des Passwortes in dem Anwendergerät (6) zu dem Passwort kombiniert werden.

**8.** Vorrichtung nach Anspruch 7, wobei die vertrauenswürdige Umgebung (3) ein vorzugsweise privates Netzwerk ist.

**9.** Vorrichtung nach einem der Ansprüche 7 oder 8, wobei die Netzwerkkomponente (4) eine passive Netzwerkkomponente ist.

**10.** Vorrichtung nach einem der Ansprüche 7 oder 8, wobei die Netzkomponente (4) eine aktive Netzwerkkomponente ist.

**11.** Vorrichtung nach einem der Ansprüche 7 bis 10, wobei das Anwendergerät (6) ein netzwerkfähiges Gerät ist.

**12.** Vorrichtung nach einem der Ansprüche 7 bis 11, wobei das Passwort eine Adresse einer in der vertrauenswürdigen Umgebung (3) angeordneten Netzwerkkomponente (4) beinhaltet.
